# EUROPEAN PATENT APPLICATION

(11) **EP 0 682 872 A1**
(43) Date of publication of application: **22.11.1995**
(21) Application number: 95106713.1
(22) Date of filing: 04.05.1995
(51) Int. Cl.: A21D 13/08, A23G 3/00, A23G 3/32, A23G 3/20

(54) **An insert for food products based on an edible paste and the edible paste**

(30) Priority: 20.05.1994 CH 1570/94
(71) Applicant: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Ferrero, Pietro, B-1640 Rhode-St-Genese (BE)
(74) Representative: Bosotti, Luciano

(57) **Abstract**

An edible paste based on caramelized sugar and condensed milk (soft caramel) is used to produce inserts for use in food products each constituted by a laminar core (F) of the paste covered on both of its faces by a thin layer of wafer (S). The edible paste is preferably supplemented with hazelnut paste.

## Description

The present invention relates to an insert for food products based on an edible paste according to the preamble to Claim 1.

The edible paste in question is preferably a paste based on caramelized sugar and condensed milk. An edible paste of this type is usually known in the confectionery field as "soft caramel". By making use of the gradual setting characteristics of caramelized sugar, it can be used to produce sweets made entirely of soft caramel, for example, such as toffees, or extruded bars of soft caramel, or even more complex food products which contain such soft caramel pastes, for example, such as centres or inserts coated or associated in some way with other edible pastes.

In this field of use in particular, it may be noted that, since conventional soft caramel is constituted by a homogeneous mixture of about 40% by weight of caramelized sugar and about 60% by weight of condensed milk, it shows a certain stiffness and resistance to chewing. Whereas these latter properties may be pleasant in the case of toffees or bars, which are intended in particular essentially to be sucked and dissolved in the mouth, the same properties are usually less appreciated when use as inserts, for example, as the centre of a more complex food product, is envisaged.

These inserts are usually prepared by operations substantially comparable to extrusion and/or calendering operations.

Moreover, It has been found that, both in the case of soft caramel and in the case of similar edible pastes (which, like soft caramel, combine properties of high viscosity and stickiness) the aforementioned extrusion and/or calendering (rolling) operations are ideally carried out continuously. The particular rheology of the paste being processed (which is, in particular, affected somewhat by temperature) creates operative problems, however, when the extrusion and/or rolling operation is carried out discontinuously. This is necessary, for example, when corresponding separate quantities of the food paste are to be deposited in separate food products (such as filled biscuits, pralines, etc.) which advance, arranged in rows, beneath an orifice for supplying the product.

Whilst not wishing to be limited to any particular theory in this connection, it may be assumed that these problems (the formation of masses which tend to constitute obstruction zones, undesired curvature of the extruded and/or rolled material, etc.) can essentially be attributed precisely to the intrinsic high viscosity of the edible paste, together with its stickiness (adhesiveness).

There is therefore a need to produce inserts for food products which overcome the aforementioned problems. This is to be achieved without decisively altering either the production process or the characteristics of use of the food paste in question.

The object of the present invention is precisely to provide an insert for food products based on a food paste having these characteristics.

According to the present invention, this object is achieved by virtue of an insert for food products based on a edible paste having the specific characteristics recited in Claim 1. Advantageous developments of the invention form the subjects of the subclalms 2, 3 and 4.

A further subject of the invention is an edible paste which can be used to form an insert of the type specified above. This paste which, whilst retaining the basic organoleptic characteristics of soft caramel, is less stiff and resistant to chewing, forms the subject of Claim 5; an embodiment of the edible paste which is considered particularly advantageous forms the subject of Claim 6.

The invention will now be described purely by way of non-limiting example, with reference to the appended drawings, in which:
Figure 1 is a cross-section showing the structure of an insert according to the invention, and
Figure 2 shows a possible embodiment of such an insert as a whole.

As already stated in the introductory part of the present description, the invention has been developed with particular attention to the edible paste based on caramelized sugar and condensed milk currently known as "soft caramel".

One aspect of the present invention is based upon the recognition of the fact that a paste of the "soft caramel" type can usefully be supplemented with a paste based on vegetable oil and hazelnuts to produce a formulation by weight such as:

| | |
|---|---|
| condensed milk | 44% |
| caramelized sugar | 36% |
| vegetable oil | 11% |
| hazelnuts | 9% |

the basic characteristic of which can be taken as less stiffness and/or resistance to chewing in comparison with conventional soft caramel; this characteristic is achieved, moreover, whilst the basic organoleptic characteristics of soft caramel are retained.

A food paste of the type specified above is suitable, like conventional soft caramel, for preparation by the mixing of the ingredients (carried out according to widely known criteria which do not need to be described herein and which, moreover, are not relevant for the purposes of an understanding of the invention) with subsequent reduction to elongate elements or sheets by operations substantially comparable to extrusion and/or calendering (rolling) operations.

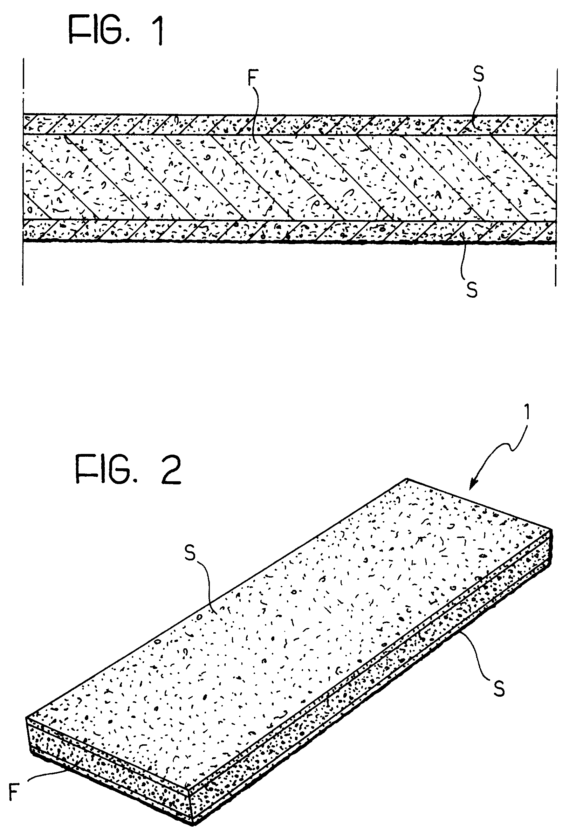

More generally, the invention is based upon the recognition of the fact that the problems - described in detail above - which arise during the processing of a highly viscous and sticky edible paste, such as conventional soft caramel or the food paste supplemented with hazelnut paste described above, can easily be overcome by subjecting the edible paste to a continuous calendering or rolling step, thus producing a continuous sheet F (Figure 1) of a predetermined thickness, from the food paste, and then applying two layers of wafer S to the two faces of the sheet (again according to widely known criteria). The term "wafer" which is current in the food field, generally identifies a thin layer formed by a batter based on wheat flour, typically having a thickness of the order of 0.2 mm.

The laminated product thus produced (a section of which is shown schematically in Figure 1) can then easily be cut into pieces by cutting or punching operations thus producing inserts such as the insert indicated 1 in Figure 2. This insert is constituted essentially by a core F made of a highly viscous and sticky food paste such as the food paste based on caramelized sugar, condensed milk and hazelnut paste described above. The core F is covered on both of its faces by a thin layer of wafer S.

Since they are produced from sheet materials, the inserts 1 may be of any shape and size. It will be appreciated that the shaping (cutting, possibly in several steps, punching, etc.) which leads to the formation of the insert 1 can be achieved without particular problems (adhesion of the paste to the cutting and punching tools, etc. and to their supports) precisely by virtue of the presence of the two layers of wafer S, the function of which is primarily that of considerably reducing and, in practice, cancelling out the stickiness characteristics of the paste F being processed.

Naturally, the principle of the invention remaining the same, the details of construction and the forms of embodiment may be varied widely with respect to those described and illustrated, without thereby departing from the scope of the present invention.

## Claims

1. An insert (1) for food products based on a highly viscous and sticky edible paste (F), characterized in that it comprises:
- a laminar core (F) constituted by the edible paste, and
- a coating layer of wafer (S) on both faces of the laminar core (F)

2. An insert according to Claim 1, characterized in that the laminar core (F) is constituted by an edible paste based on caramelized sugar and condensed milk, such as soft caramel.

3. An insert according to Claim 1 or Claim 2, characterized in that the laminar core (F) is produced by an extrusion, calendering or rolling operation.

4. An insert according to Claim 3, characterized in that the insert (1) is produced by a cutting operation from a sheet comprising the laminar core (F) with the covering layer of wafer (S) on both faces of the laminar core (F).

5. An edible paste based on caramelized sugar and condensed milk for forming an insert according to any one of Claims 1 to 4, characterized in that it is supplemented with hazelnut paste.

6. An edible paste according to Claim 4, characterized in that it has substantially the following composition by weight:
| | |
|---|---|
| condensed milk | 44% |
| caramelized sugar | 36% |
| vegetable oil | 11% |
| hazelnuts | 9%. |
